# EUROPEAN PATENT SPECIFICATION

(11) **EP 4 044 182 B1**
(45) Date of publication and mention of the grant of the patent: **31.12.2025**
(21) Application number: 21156858.9
(22) Date of filing: 12.02.2021
(51) Int. Cl.: G11B 7/0045, G03F 7/00, G06K 19/00, G11B 7/243, G11B 7/253, G11B 11/03

(54) **ULTRA-THIN DATA CARRIER**
ULTRADÜNNER DATENTRÄGER
SUPPORT DE DONNÉES ULTRAMINCE

(43) Date of publication of application: 17.08.2022
(73) Proprietor: Ceramic Data Solutions GmbH, 4810 Gmunden (AT)
(72) Inventor: Kunze, Martin, 4810 Gmunden (AT); Pflaum, Christian, 8237 Bernried (DE)
(74) Representative: Vossius & Partner Patentanwälte Rechtsanwälte mbB

(56) References cited:
- JP-A- H02 215 587
- JP-A- H02 277 689
- US-A- 4 214 249
- US-A- 4 394 661
- US-A- 4 397 923
- US-A- 4 797 316
- US-A- 4 999 278
- US-A- 6 120 907
- US-A1- 2006 120 262
- US-A1- 2010 068 444
- US-A1- 2010 151 391
- US-A1- 2016 118 077

## Description

The present invention relates to an ultra-thin data carrier.

It is estimated that, on average, humans generate about 2.5 quintillion bytes per day. While a large portion of said data may be generated for short-term use only, the demand for long-term data storage is increasing on a day by day basis. Apparently, state of the art data carriers such as flash, hard disc drives (HDD) and magnetic tape are far from ideal in terms of long-term storage. Thus, companies like Microsoft are currently exploring alternative techniques for alternative storage technologies (see, for example, the so-called "Project Silica" and US 10,719,239 B2).

A different technique for long-term storage of information has been described in PCT/EP2019/071805 (not yet published). Said technique is based on the use of a ceramic substrate coated with a layer of a different material and encoding information on said coated substrate by using, e.g., a laser in order to manipulate localized areas of said coated substrate. This technique has proven to allow for information storage which is highly resistant to moisture, electromagnetic fields, acidic and corrosive substances, etc. such that the encoded writable ceramic plate provides a durability which is unavailable from other commonly used information storage mediums. One potential disadvantage of said technique, though, is the use of rather voluminous ceramic plates having a thickness of about 1 mm. Accordingly, the data storage density per volume may not achieve data storage densities of currently used data carriers.

The document US2010/0151391A1 discloses a copy master comprising a substrate formed of glass, quartz or sapphire, the substrate having an approximate thickness of about 0.1-2mm, and a mask layer deposited on the substrate by sputtering, evaporation, etc., wherein the mask layer comprises recesses encoding information and is made from chrome or iron oxide or from other metal oxides, nitrides, and carbides.

The document US2010/0068444A1 discloses an optical information medium comprising a support substrate from fused silica or glass, the substrate having a thickness of 0.1mm, and a data layer comprising recesses encoding information, wherein the data layer can comprises carbon, amorphous carbon, diamond-like carbon, silicon carbide, boron carbide, boron nitride, silicon, amorphous silicon, germanium, amorphous germanium, or combinations thereof.

The document US4124249 discloses a recording member comprising a support made of a glass plate and having a thickness of 200µm and a coating that is vacuum-deposited on the support and that is heat-treated in hydrogen sulfide at 400C for about 30 minutes, wherein the coating is from chalcogenide glass.

Accordingly, there is a need for further improvement of data carriers suitable for long-term use and storage.

The inventors of the present invention have now, surprisingly, realized that the techniques described in PCT/EP2019/071805 may be analogously employed on thin films of glass ceramic, ceramic or glass material.

Accordingly, the present disclosure, according to a first aspect (not covered by the wording of the claims), relates to a data carrier comprising a ceramic (glass ceramic or glass) substrate having first and second opposite surfaces and a thickness of at most 200 µm, preferably of at most 150 µm, wherein the first surface of the substrate comprises a plurality of recesses encoding information, wherein each recess preferably has a depth of at most 1 µm. While said ceramic films, due to their thickness, may be mechanically less stable as they may, e.g., break during excessive kinking, their resistance to moisture, electromagnetic fields and acidic or corrosive substances is as high as that of the ceramic substrates described in PCT/EP2019/071805. At the same time, reducing the thickness of the data carrier by at least a factor of 6 automatically increases the data storage density per volume by the same factor.

The information encoded by means of the plurality of recesses may be analog and/or digital information. For example, the plurality of recesses may, in conjunction, form an analogue image, text, numbers or the like. Alternatively, the plurality of recesses may encode digital information similar to, for example, digital information encoded on a CD, DVD Blu-ray Disc or a data matrix code. In any case, the encoded information can preferably be decoded optically, either visually by the naked eye or with the help of suitable optics such as a microscope or the like or by means of an optical decoder.

Different from the information storage medium according to PCT/EP2019/071805, the data carrier according to the first aspect of the present disclosure does not require an additional coating. Since the ceramic films used for the data carrier of the present disclosure are sufficiently flexible to be wound up on a roll, it may, under certain premises, be challenging to coat said ceramic film and to maintain said coating after data encoding and bending of the substrate. Accordingly, it is the substrate of the data carrier according to the first aspect that comprises the plurality of recesses encoding the information. These recesses may be generated by means of a laser beam and may have various shapes and/or depths as described in great detail in PCT/EP2020/068892 (not yet published), which document is fully incorporated herein by reference, in particular with regard to any disclosure therein explaining in detail how to encode information by means of recess depth. In its most simple form of this first aspect, each recess has about the same depth and the optical decoder detects the difference between a substrate area without recess and a recess by measuring, for example, a phase difference or detecting changes in the reflectivity (if, for example, the substrate surface is polished and the bottom of the recess is curved or roughened). In order to minimally distort the thin ceramic film material it is preferred that the recesses have a depth as small as possible, for example a depth of at most 100 nm, preferably of at most 50 nm and even more preferably of at most 30 nm. It is also preferred that the depth of each recess is smaller than 1%, preferably smaller than 0.1%, more preferably smaller than 0.05% of the thickness of the substrate.

In order to further increase the data storage density it is preferred that the second surface of the substrate also comprises a plurality of recesses encoding information, each recess having a depth of at most 1 µm and properties similar to those discussed above. Since the thickness of the substrate is at least two orders of magnitude greater than the depth of each recess one may distinguish, using well known techniques, whether light has been reflected on the first surface, at the bottom of a recess of the first surface or at the opposing second surface.

According to a second aspect, the present invention relates to a data carrier comprising a ceramic substrate having first and second opposite surfaces and a thickness of at most 150 µm, wherein the first surface of the substrate is coated with a first coating, the material of the first coating being different from the material of the ceramic substrate, wherein the first coating comprises a plurality of recesses encoding information, wherein the recesses are generated in the first coating by means of laser ablation with femtosecond laser pulses, wherein during manufacturing of the data carrier the coated substrate is tempered at a temperature of at least 200 °C so that a sintered interface is present between the substrate and the first coating, and wherein the material of the first coating comprises one or a combination of the following materials: a metal nitride, a metal carbide, a metal oxide, a metal boride, a metal silicide.

In comparison to the first aspect of the present disclosure discussed above, the additional coating of the invention provides the benefit of allowing for more complex optical effects, which are outlined in detail in PCT/EP2019/071805. For example, the material of the first coating may have different optical properties compared to the optical properties of the ceramic substrate. For example, if the material of the ceramic substrate exhibits a bright or white color, whereas the material of the first coating exhibits a dark or black color, ablating the material of the first coating so as to create recesses which extend all the way towards or even into the ceramic substrate will create a strong optical contrast between the overall surface of the first coating on the one hand and each of the recesses on the other hand. This contrast may be visible (e.g., for the naked eye) generating the impression of an image, text or the like or may provide a digital encoding (recess versus no recess) which may be easily and reliably decoded by an optical decoder.

However, in view of the envisaged long-term use of the data carrier of the present invention, one has to ascertain that the first coating remains reliably attached to the ceramic substrate, preferably even if the substrate is bent or wound up on a roll. Therefore, it is preferable to apply a rather thin coating layer having a thickness of at most 10 µm, preferably at most 1 µm, more preferably at most 200 nm, even more preferably at most 150 nm, even more preferably at most 100 nm, even more preferably at most 50 nm, even more preferably at most 30 nm and most preferably at most 20 nm. In terms of the optical effect to be achieved, e.g. by means of an optical contrast, it is sufficient to provide for a thickness which allows for substantial absorption, multiscattering, reflection, or the like.

In view of ease of the coating process and, in particular, the decoding process it is preferred that the average roughness Ra of both the substrate surface and the coating surface is smaller than 10 nm, preferably smaller than 5 nm, more preferably smaller than 3 nm. Ra is the arithmetic average value of a filtered roughness profile determined from deviations about the center line along the evaluation length.

Since the first coating on the ceramic substrate may create strain in the data carrier, it may be beneficial to coat both surfaces of the ceramic substrate in order to achieve a symmetric strain. It is therefore preferred that the second surface of the substrate is coated with a second coating, the material of the second coating being different from the material of the ceramic substrate (and preferably identical to the material of the first coating). Of course, if a second coating is provided, said second coating may also be used to encode additional information, thus doubling the amount of data to be stored on the data carrier. Accordingly, it is preferred that the second coating also comprises a plurality of recesses encoding information.

In order to ensure a strong bond between the first and second coating and the ceramic substrate, the data carrier is tempered after the coating process. Such tempering achieves a sintered interface between the substrate and the first coating and/or between the substrate and the second coating, which sintered interface enhances the bond between substrate and coating(s). Preferably, the sintered interface comprises at least one element from the substrate and at least one element from the respective coating.

As mentioned above, the data carrier according to the second aspect allows for providing an optical contrast or another difference in an optical property between areas of unperturbed coating and areas with a recess. For this purpose, it is preferred that each recess in the first and/or second coating has a depth which is equal to or greater than the thickness of the respective coating. In other words, it is preferred that the coating material is substantially completely ablated (or evaporated or otherwise removed) at each recess in order to make the material of the ceramic substrate accessible for optical decoding (by, e.g., the naked eye, a microscope, a camera or a more sophisticated optical decoder). In this context, it would be ideal to exactly remove all coating material at a recess position without affecting the ceramic substrate. Yet, this may be difficult to reliably and reproducibly control. Accordingly, it may be preferable to control the laser system used for ablation such that each recess in a first and/or second coating has a depth which is slightly greater than the thickness of the respective coating. For example, the ratio between the depth of each recess and the thickness of the respective coating may be in a range between 1.01 and 1.2, preferably between 1.01 and 1.1, more preferably between 1.02 and 1.05. Preferably, each recess extends into the ceramic substrate with a depth of at most 1 µm, preferably of at most 100 nm, more preferably of at most 50 nm, even more preferably of at most 30 nm, even more preferably of at most 20 nm and most preferably of at most 10 nm.

It may also be preferable that each recess in the first and/or second coating has a depth which is smaller than the thickness of the respective coating. For example, the depth of each recess may be optimized such that the recess never touches the ceramic substrate, while at the same time the bottom material below the recess of the respective coating is sufficiently thin that laser light of a specific wavelength may still, at least partly, transmit through said coating material and reach the material of the ceramic substrate in order to achieve the optical contrast discussed above. For this purpose, it is preferred that the ratio between the depth of each recess and the thickness of the respective coating is in a range between 0.9 and 0.99, preferably between 0.95 and 0.99, more preferably in a range between 0.97 and 0.99. Alternatively, each recess in the first and/or second coating may have a depth which is substantially smaller than the thickness of the respective coating. In this case, the recesses may be utilized in a way similar to the first aspect of the present disclosure discussed above. In other words, the ceramic substrate in this case merely serves as a carrier substrate with the encoding and decoding taking place entirely with respect to the coating material only.

Preferably, the first and/or second coating comprises one or a combination of the following materials: a metal nitride such as CrN, CrAlN, TiN, TiCN, TiAlN, ZrN, AIN, VN, Si₃N₄, ThN, HfN, BN; a metal carbide such as TiC, CrC, Al₄C₃, VC, ZrC, HfC, ThC, B₄C, SiC; a metal oxide such as Al₂O₃, TiO₂, SiO₂, ZrO₂, ThO₂, MgO, Cr₂O₃, Zr₂O₃, V₂O₃; a metal boride such as TiB₂, ZrB₂, CrB₂, VB₂, SiB₆, ThB₂, HfB₂, WB₂, WB₄; or a metal silicide such as TiSi₂, ZrSi₂, MoSi₂, MoSi, WSi₂, PtSi_{,}, Mg₂Si.

Of course, all features discussed above with regard to the first aspect, which may also be employed in the context of the second aspect, should be considered to be disclosed for the second aspect as well. Moreover, all features discussed further below apply equally to both aspects of the present disclosure/invention.

Preferably, the ceramic substrate comprises one or a combination of the following materials: silicon oxide, aluminum oxide, boron oxide, sodium oxide, potassium oxide, lithium oxide, zinc oxide, magnesium oxide.

Preferably, the substrate is transparent for at least one wavelength range within the visible spectrum, preferably over the entire visible spectrum, i.e. between 400 nm and 700 nm and/or with the UV spectrum, preferably over the entire UV spectrum, i.e. between 100 nm and 400 nm. Preferably, the substrate exhibits a transmittance of at least 80 %, preferably at least 90 % and more preferably at least 95 % for at least one wavelength range within the visible spectrum, preferably over the entire visible spectrum, i.e. between 400 nm and 700 nm and/or within the UV spectrum, preferably over the entire UV spectrum, i.e. between 100 nm and 400 nm.

The data carriers of the present invention may be provided in thin sheets, which may be stacked on top of each other. For example, each data carrier may be a circular, disc-like, rectangular, or quadratic sheet, for example a sheet of 10 cm x 10 cm. Such sheets may be easily handled during encoding and decoding and may be stacked on top of each other with, e.g., 50 or even 500 sheets forming one stack.

Alternatively, the data carrier may be an elongated film, which may be wound up in a roll. For this purpose, it is particularly advantageous if the substrate (and preferably the entire data carrier) has a Young's modulus of at most 80 GPa, preferably of at most 75 GPa. It is further preferred that the data carrier does not break at a radius of curvature of 100 mm, preferably 50 mm and more preferably 25 mm, and more preferably 10 mm, and more preferably 5 mm. and more preferably 2.5 mm. In order to achieve these mechanical properties it is preferred to make the data carrier as thin as possible. Preferably, the thickness of the data carrier is at most 130 µm, more preferably at most 110 µm, even more preferably at most 100 µm, even more preferably at most 90 µm and most preferably at most 80 µm.

As discussed above, the recesses may have an arbitrary shape and may be elliptical, round, rectangular, square or the like. Different recesses of different shapes may be utilized to also encode information. However, in its most simple and straightforward approach, a plurality of essentially identical, substantially round recesses are generated by means of, e.g., a laser beam. These recesses may be arranged in a regular pattern such as a rectangular, a square or a hexagonal pattern in order to encode digital information. Preferably, the diameter of said recesses is as small as possible, yet still sufficiently large that a proper decoding is possible. Preferably, each recess has a maximum extension perpendicular to its depth of at most 1 µm, preferably of at most 500 nm, more preferably of at most 300 nm, even more preferably of at most 200 nm and most preferably of at most 150 nm.

Preferably, the data carrier comprises at least 10 Megabytes of encoded information per cm² (per substrate surface), more preferably at least 100 Megabytes of encoded information per cm² and even more preferably at least 1 Gigabyte of information per cm².

The present disclosure further relates to a method of manufacturing a data carrier as described above. For manufacturing the data carrier according to the first aspect, a ceramic substrate is provided and a plurality of recesses in either or both surfaces of the substrate are generated by means of laser ablation. For manufacturing a data carrier according to the second aspect, a ceramic substrate is provided, either or both surfaces of the substrate are coated with first and/or second coatings, and a plurality of recesses are generated in the first and/or second coatings by means of laser ablation.

Laser ablation may be achieved by using, e.g., a pulsed laser, preferably a femtosecond laser. In order to achieve preferably cylindrical recesses, it is preferred to use a laser beam having a Gaussian or Bessel shape.

Coating either or both surfaces of the substrate with first and/or second coatings may be performed by various known techniques. Particularly preferred techniques are physical vapor deposition or chemical vapor deposition.

As mentioned above, tempering enhances the bond between substrate and coating. Thus, the method comprises tempering the coated substrate at a temperature of at least 200°C, preferably at least 500°C and more preferably at least 1,000°C.

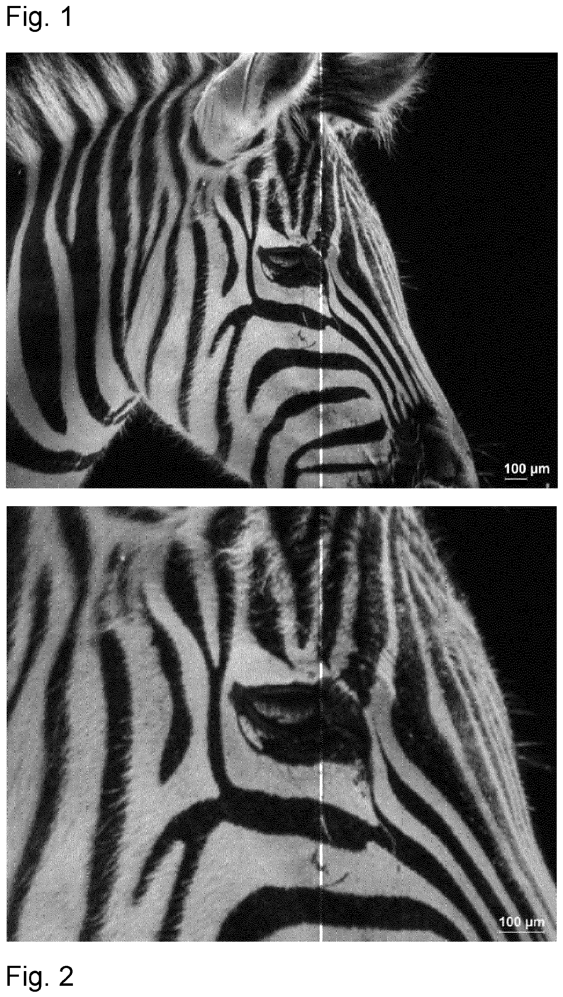

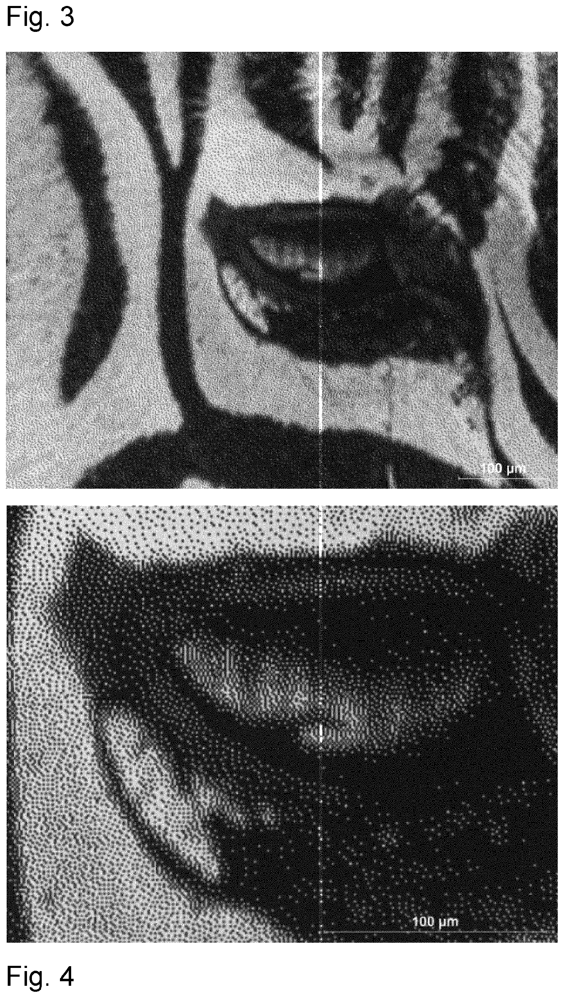

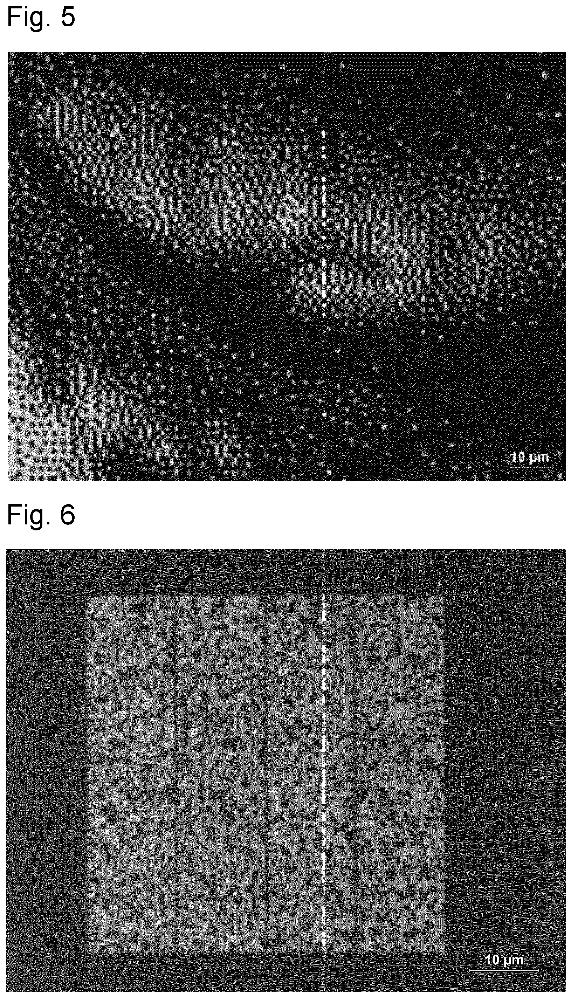

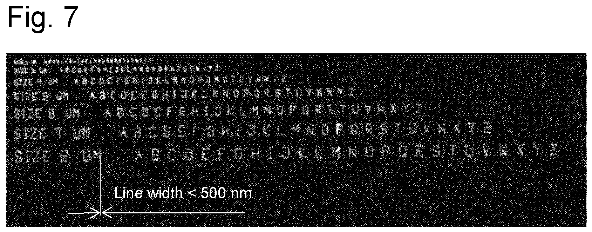

An example of the present invention is subsequently described with reference to the Figures, which show:
o Figure 1 a transmission microscopy image of an exemplary data carrier at a magnification of 5x;
o Figure 2 a transmission microscopy image of the data carrier of Figure 1 at a magnification of 10x;
o Figure 3 a transmission microscopy image of the data carrier of Figure 1 at a magnification of 20x;
o Figure 4 a transmission microscopy image of the data carrier of Figure 1 at a magnification of 50x;
o Figure 5 a transmission microscopy image of the data carrier of Figure 1 at a magnification of 100x;
o Figure 6 a transmission microscopy image of another exemplary data carrier inscribed with information encoded digitally; and
o Figure 7 a transmission microscopy image of another exemplary data carrier inscribed with alphabetic characters in single-line font of 2-8 µm height.

For the examples, a ceramic substrate having a size of 10 mm x 10 mm and consisting of 100 µm thick sapphire substrate (Al₂O₃) was coated with a coating of CrN having a thickness of 100 nm by means of physical vapor deposition (PVD). Circular recesses having a diameter of about 1 µm (Example 1) and approximately 500 nm (Examples 2 and 3) were ablated from the coating using a 200 femtosecond laser at a wavelength of 515 nm.

The resulting data carrier of Example 1 was imaged with an Olympus BX-51 at various magnifications. The respective transmission microscopy images at magnifications of 5x, 10x, 20x, 50x and 100x are shown in Figures 1-5, respectively.

As is evident from these Figures, it is possible to reliably and irreversibly create recesses in the coating so as to achieve a superb optical contrast between the material of the ceramic substrate (which is transparent) and the material of the coating layer (which is light absorbing). While the recesses of this Example 1 encode analogue information, namely the photograph of the zebra, it is similarly possible to use the various recesses to encode digital information (recess present versus recess not present) as depicted in Fig. 6 (Example 2) or alphanumeric characters as displayed in Fig. 7 (Example 3). In Example 2, individual "pixels" are smaller than 500 nm in width. In Example 3, the line width of the characters is approximately 500 nm.

The coating and ablation techniques illustrated above with reference to the examples may be analogously employed with a ceramic substrate having a thickness of at most 200 µm. For example, the same coating may be applied onto the so-called glass-ribbon (reference number 2010-03E) available from Nippon Electric Glass. Said glass-ribbon is available in thicknesses between 4 µm and 50 µm and lengths of up to 100 m. Other suitable and particularly preferred materials are: AGC Spool, AGC Dragontrail, Corning Willow Glass, Nippon Electric Glass - G-Leaf (Ultra-thin Glass), SCHOTT AS 87 eco, SCHOTT AF 32 Eco, and SCHOTT Xensation^{®} Flex.

## Claims

1. A data carrier comprising a ceramic substrate having first and second opposite surfaces and a thickness of at most 150 µm, wherein the first surface of the substrate is coated with a first coating, the material of the first coating being different from the material of the ceramic substrate, wherein the first coating comprises a plurality of recesses encoding information, wherein the recesses are generated in the first coating by means of laser ablation with femtosecond laser pulses, wherein during manufacturing of the data carrier the coated substrate is tempered at a temperature of at least 200 °C so that a sintered interface is present between the substrate and the first coating, and wherein the material of the first coating comprises one or a combination of the following materials: a metal nitride, a metal carbide, a metal oxide, a metal boride, a metal silicide.

2. The data carrier of claim 1, wherein the second surface of the substrate is coated with a second coating, the material of the second coating being different from the material of the ceramic substrate, wherein the second coating comprises a plurality of recesses encoding information.

3. The data carrier of claim 2, wherein a sintered interface is present between the substrate and the second coating.

4. The data carrier of claim 2 or 3, wherein the second coating comprises one or a combination of the following materials: a metal, a metal nitride, a metal carbide, a metal oxide, a metal boride or a metal silicide.

5. The data carrier of any of the preceding claims, wherein the thickness of the first and/or second coating is at most 1 µm.

6. The data carrier of any of the preceding claims, wherein each recess in the first and/or second coating has a depth of at most 100 nm.

7. The data carrier of any of the preceding claims, wherein each recess in the first and/or second coating has a depth which is smaller than the thickness of the respective coating.

8. The data carrier of any of claims 1 to 6, wherein each recess in the first and/or second coating has a depth which is substantially equal to the thickness of the respective coating.

9. The data carrier of any of claims 1 to 6, wherein each recess in the first and/or second coating has a depth which is greater than the thickness of the respective coating.

10. The data carrier of claim 9, wherein each recess extends into the substrate with a depth of at most 100 nm.

11. The data carrier of any of the preceding claims, wherein the sintered interface comprises at least one element from the substrate and at least one element from the respective coating.

12. The data carrier of any of the preceding claims, wherein the ceramic substrate comprises one or a combination of the following materials: silicon oxide, aluminum oxide, boron oxide, sodium oxide, potassium oxide, lithium oxide, zinc oxide, magnesium oxide.

13. The data carrier of any of the preceding claims, wherein the data carrier is wound up in a roll.

## Patentansprüche

1. Datenträger, der ein keramisches Substrat mit einer ersten und einer zweiten gegenüberliegenden Oberfläche und einer Dicke von höchstens 150 µm aufweist, wobei die erste Oberfläche des Substrats mit einer ersten Beschichtung beschichtet ist, wobei sich das Material der ersten Beschichtung von dem Material des keramischen Substrats unterscheidet, wobei die erste Beschichtung mehrere Vertiefungen aufweist, die Informationen codieren; wobei die Vertiefungen in der ersten Beschichtung mittels Laserablation mit Femtosekunden-Laserpulsen erzeugt wurden, wobei während der Herstellung des Datenträgers das beschichtete Substrat bei einer Temperatur von mindestens 200°C getempert wird, damit eine gesinterte Grenzfläche zwischen dem Substrat und der ersten Beschichtung vorliegt, und wobei das Material der ersten Beschichtung eines der oder eine Kombination aus den folgenden Materialen aufweist: ein Metallnitrid, ein Metallcarbid, ein Metalloxid, ein Metallborid, ein Metallsilicid.

2. Datenträger nach Anspruch 1, wobei die zweite Oberfläche des Substrats mit einer zweiten Beschichtung beschichtet ist, wobei sich das Material der zweiten Beschichtung von dem Material des keramischen Substrats unterscheidet, wobei die zweite Beschichtung mehrere Vertiefungen aufweist, die Informationen codieren.

3. Datenträger nach Anspruch 2, wobei zwischen dem Substrat und der zweiten Beschichtung eine gesinterte Grenzfläche vorliegt.

4. Datenträger nach Anspruch 2 oder 3, wobei die zweite Beschichtung eines der oder eine Kombination aus den folgenden Materialien aufweist: ein Metall, ein Metallnitrid, ein Metallcarbid, ein Metalloxid, ein Metallborid oder ein Metallsilicid.

5. Datenträger nach einem der vorhergehenden Ansprüche, wobei die Dicke der ersten und/oder der zweiten Beschichtung höchstens 1 µm beträgt.

6. Datenträger nach einem der vorhergehenden Ansprüche, wobei jede Vertiefung in der ersten und/oder zweiten Beschichtung eine Tiefe von höchstens 100 nm aufweist.

7. Datenträger nach einem der vorhergehenden Ansprüche, wobei jede Vertiefung in der ersten und/oder zweiten Beschichtung eine Tiefe aufweist, die kleiner ist als die Dicke der jeweiligen Beschichtung.

8. Datenträger nach einem der Ansprüche 1 bis 6, wobei jede Vertiefung in der ersten und/oder zweiten Beschichtung eine Tiefe aufweist, die im Wesentlichen gleich der Dicke der jeweiligen Beschichtung ist.

9. Datenträger nach einem der Ansprüche 1 bis 6, wobei jede Vertiefung in der ersten und/oder zweiten Beschichtung eine Tiefe aufweist, die größer als die Dicke der jeweiligen Beschichtung ist.

10. Datenträger nach Anspruch 9, wobei sich jede Vertiefung mit einer Tiefe von höchstens 100 nm in das Substrat erstreckt.

11. Datenträger nach einem der vorangehenden Ansprüche, wobei die gesinterte Grenzfläche mindestens ein Element aus dem Substrat und mindestens ein Element aus der jeweiligen Beschichtung aufweist.

12. Datenträger nach einem der vorhergehenden Ansprüche, wobei das keramische Substrat eines der oder eine Kombination folgenden folgenden Materialien aufweist: Siliciumoxid, Aluminiumoxid, Boroxid, Natriumoxid, Kaliumoxid, Lithiumoxid, Zinkoxid, Magnesiumoxid.

13. Datenträger nach einem der vorhergehenden Ansprüche, wobei der Dateienträger zu einer Rolle aufgewickelt ist.

## Revendications

1. Support de données comprenant un substrat céramique ayant une première et une deuxième surfaces opposées et une épaisseur d'au plus 150 µm, où la première surface du substrat est recouverte d'un premier revêtement, le matériau du premier revêtement étant différent du matériau du substrat céramique, où le premier revêtement comprend une pluralité d'évidements codant des informations ; dans lequel les évidements sont générés par ablation laser par un laser à impulsions femtoseconde ; dans lequel, pendant la fabrication du support de données, le substrat revêtu est trempé à une température d'au moins 200°C pour obtenir une interface frittée entre le substrat et le premier revêtement et dans lequel le matériau du premier revêtement comprend un des matériaux suivants, ou une combinaison de ceux-ci : un nitrure métallique ; un carbure métallique ; un oxyde métallique ; un borure métallique ; ou un siliciure métallique.

2. Support de données selon la revendication 1, dans lequel la deuxième surface du substrat est recouverte d'un deuxième revêtement, le matériau du deuxième revêtement étant différent du matériau du substrat céramique dans lequel le deuxième revêtement comprend une pluralité d'évidements codant des informations.

3. Support de données selon la revendication 2, dans lequel une interface frittée est présente entre le substrat et le deuxième revêtement.

4. Support de données selon la revendication 2 ou la revendication 3, dans lequel le deuxième revêtement comprend un des matériaux suivants, ou une combinaison de ceux-ci : un métal ; un nitrure métallique ; un carbure métallique ; un oxyde métallique ; un borure métallique ; ou un siliciure métallique.

5. Support de données selon l'une des revendications précédentes dans lequel l'épaisseur du premier et/ou du deuxième revêtement est de 1 µm au maximum.

6. Support de données selon l'une des revendications précédentes, dans lequel chaque évidement dans le premier et/ou le deuxième revêtement a une profondeur de 100 nm au maximum.

7. Support de données selon l'une des revendications précédentes, dans lequel chaque évidement dans le premier et/ou le deuxième revêtement a une profondeur inférieure à l'épaisseur du revêtement respectif.

8. Support de données selon l'une des revendications 1 à 6, dans lequel chaque évidement dans le premier et/ou le deuxième revêtement a une profondeur sensiblement égale à l'épaisseur du revêtement respectif.

9. Support de données selon l'une des revendications 1 à 6, dans lequel chaque évidement dans le premier et/ou le deuxième revêtement a une profondeur supérieure à l'épaisseur du revêtement respectif.

10. Support de données selon la revendication 9, dans lequel chaque évidement s'étend dans le substrat avec une profondeur de 100 nm au maximum.

11. Support de données selon l'une des revendications précédentes, dans lequel l'interface frittée comprend au moins un élément du substrat et au moins un élément du revêtement respectif.

12. Support de données selon l'une des revendications précédentes, dans lequel le substrat céramique comprend un des matériaux suivants, ou une combinaison de ceux-ci : oxyde de silicium, oxyde d'aluminium, oxyde de bore, oxyde de sodium, oxyde de potassium, oxyde de lithium, oxyde de zinc, oxyde de magnésium.

13. Support de données selon l'une des revendications précédentes, dans lequel le support de données est enroulé en rouleau.
